# EUROPÄISCHE PATENTSCHRIFT

(11) **EP 0 510 293 B1**
(45) Veröffentlichungstag und Bekanntmachung des Hinweises auf die Patenterteilung: **01.03.1995**
(21) Anmeldenummer: 92100243.2
(22) Anmeldetag: 09.01.1992
(51) Int. Cl.: C08J 11/02, C08J 11/06

(54) **Verfahren zur Rückgewinnung von Polyvinylchlorid aus lösungsmittelhaltigen PVC-Abfallpasten**
Process for recycling of polyvinyl chloride from solvent containing PVC waste paste
Procédé de recyclage de chlorure de polyvinyle à partir de déchets pâteux de PVC contenant des solvants

(30) Priorität: 24.04.1991 DE 4113336
(43) Veröffentlichungstag der Anmeldung: 28.10.1992
(73) Patentinhaber: Firma Carl Freudenberg, 69469 Weinheim (DE)
(72) Erfinder: Hausdorf, Jörg, W-6149 Fürth (DE); Anselm, Bardo, W-6947 Laudenbach (DE); Kosack, Steffen, Dr., W-6733 Hassloch (DE); Schäfer, Peter, W-6901 Heiligkreuzsteinach (DE); Schneider, Rolf, W-6140 Bensheim-Zell (DE); Seiderer, Stefan, W-6946 Gorxheimertal (DE)

(56) Entgegenhaltungen:
- WO-A-81/00412
- FR-A- 2 337 164

## Beschreibung

Die Erfindung befaßt sich mit der Rückgewinnung von Polyvinylchlorid aus lösungsmittelhaltigen PVC-Abfallpasten. Die Pasten werden lösungsmittelfrei verwendet für die Herstellung von Synthetics, welche z.B. in der Kraftfahrzeug-, Schuh- und Lederwarenindustrie als Flächenware Verwendung finden für z.B. Taschen, Koffer, Autositze oder Schuh-Obermaterial.

Die häufigsten Inhaltsstoffe solcher Pasten sind - neben Polyvinylchlorid - Weichmacher, Füllstoffe, Pigmente, Stabilisatoren und auch Flammschutzmittel. Sie werden durch Pumpen und Leitungen zu den Verarbeitungsstationen gefördert.Diese Pumpen und Leitungen können bei Produktionswechsel nur mit einem Lösungsmittel, zweckmäßig ein aromatisches Benzin, von den PVC-haltigen Rückständen befreit werden, die eine lackartige bis pastöse Konsistenz besitzen. Die dabei entstehenden, lösungsmittelhaltigen Abfallpasten besitzen meist einen Feststoffgehalt von etwa 60 Gew.-% und müssen in Spezialbetrieben im Lohnauftrag durch Abdestillation des Lösungsmittels verarbeitet werden, wobei je nach Lösungsmittel-Restgehalt ein hochviskoser oder stark verkrusteter Blasenrückstand erhalten wird, der als Sondermüll entsorgt werden muß. Es ist keine Möglichkeit bekannt, das Verfahren derart zu modifizieren, daß die Rückstände wiederverwertet werden können.

Die Erfindung hat zur Aufgabe, PVC-Pasten, gleich welcher Konsistenz, also auch lackartig, in jeweils wiederverwendbarer Form zurückzugewinnen, und zwar derart vollständig, daß die Bestandteile keinen Sondermüll mehr darstellen.

Die Lösung dieser Aufgabe besteht in einem Verfahren gemäß dem Patentanspruch. Die mit dem Lösungsmittel versetzte PVC-Abfallpaste, die üblicherweise ein Trockengewicht um 60 % aufweist, wird mit dem Emulgator Acylpolyethylenglykolester im Gewichtsverhältnis 20 Teile Paste : 1 Teil Emulgator versetzt. Solche Emulgatoren sind im Handel erhältlich und spezifiziert für die Herstellung von Emulsionen von Fettsäuren, fetten Ölen, organischen Lösungsmitteln und darin gelösten organischen Stoffen. Über das Verhalten solcher Emulsionen, insbesondere über die Trennbarkeit der Inhaltsstoffe, werden keine Angaben gemacht.

Für die Erfindung ist es notwendig, daß das Trockengewicht der lösungsmittelhaltigen Abfall-Paste von 60 Gew.-% mit einer Abweichung ± 10 % eingehalten werden muß. Vor der erfindungsgemäßen Verarbeitung kann dies jedoch leicht geprüft bzw. korrigiert werden.

Das angegebene Gewichtsverhältnis Emulgator zu Paste bestimmt die Korngröße des freischwimmenden Granulats am Ende der Verarbeitung. Ein geringerer Anteil des Emulgators als 1:20 ergibt ein sehr grobkörniges Granulat mit Lösungsmitteleinschlüssen, ein höherer Emulgatoranteil bewirkt ein sehr feinkörniges Granulat, welches beim Filtrieren Probleme bereitet.

Nach der Zugabe des Emulgators wird unter Rühren eine zum anfänglichen Pastengewicht doppelte Gewichtsmenge Wasser zugegeben. Aus dieser Emulsion wird mittels der bekannten Wasserdampfdestillation das Lösungsmittel ausgetrieben. Es handelt sich um die in der Chemischen Technik bekannte Trägerdampfdestillation, d. h. eine Destillation mit Wasserdampf als Träger. Sie dient dazu, hochsiedende, mit Wasser nicht oder nur wenig mischbare Flüssigkeiten schon bei 98 bis 100°C destillieren zu können. Zu dem verhältnismäßig niederen Dampfdruck der destillierten Flüssigkeit addiert sich dann der Dampfdruck des heißen Wasserdampfes.

Das erhaltene Destillat besteht aus einer Lösungsmittel- und einer Wasser-Phase. Diese werden voneinander getrennt, was durch Dekantieren oder Absaugen erfolgen kann. Das Lösungsmittel ist so rein, daß es sofort wieder verwendet werden kann; gegebenenfalls ist noch eine Trocknung über körnigem Trockenmittel erforderlich, zweckmäßig verwendet man hierzu Calciumchlorid oder Molekularsiebe.

Als Rückstand der Destillation verbleibt ein feinkörniges, in Wasser schwimmendes PVC-Granulat mit einer Korngröße von 200 bis 2000 »m. Es wird abfiltriert über ein entsprechendes Siebbandfilter und anschließend mit einem Siebbandtrockner oder in einem Trockenofen getrocknet.

Das Filtrat kann als "Kunststoffabfälle verschiedener Art" zur Deponie verbracht werden oder als PVC-Regenerat zur Wiederverwertung gelangen. Ohne weitere Nachbearbeitung ist damit die Herstellung von Spritzartikeln, wie z.B. Mülleimern oder anderen Hohlkörpern, Schwingungspuffern für Eisenbahnschienen, Lärmschutzwänden oder Streumaterialien für Reithallenböden, möglich.

Ohne Wasser-/Emulgator-Zusatz entsteht unter ansonsten gleichen Bedingungen nur ein stark verkrusteter oder, bei höherem Lösungsmittel-Restgehalt, hochviskoser, als Sondermüll geltender Rückstand.

Die Erfindung ermöglicht es auch, PVC-Abfallpasten, die nicht aus der Pumpenreinigung stammen und ebenfals bisher als Sondermüll entsorgt werden mußten, umweltfreundlich und regenerierbar aufzuarbeiten. Solche lösungsmittelfreien Pasten müssen nur mit den geeigneten Lösungsmitteln, z.B. mit einem aromatischen Benzin, im Gewichtsverhältnis 1 Teil Lösungsmittel : 20 Teile Paste versetzt werden und können anschließend wie die erwähnten Pumpen- und Leitungsrückstände erfindungsgemäß verarbeitet werden.

## Patentansprüche

1. Verfahren zur Rückgewinnung von Polyvinylchlorid aus lösungsmittelhaltigen PVC-Abfallpasten, wobei das Lösungsmittel durch Destillation aus der Paste entfernt wird, dadurch gekennzeichnet, daß man die lösungsmittelhaltige PVC-Abfallpaste auf ein Trockengewicht von 60 Gew.% mit einer Abweichung von ± 10% bringt,
daß man den Emulgator Acylpolyethylenglykolester im Gewichtsverhältnis 1 Teil Ester zu 20 Teile Abfallpaste zugibt,
daß man anschließend unter Rühren das Doppelte des anfänglichen Pastengewichts an Wasser zusetzt,
daß man aus dieser Emulsion mittels Wasserdampf das Lösungsmittel austreibt, das entstandene zweiphasige Wasser-/Lösungsmittel-Destillat von der Wasserphase befreit
und daß man das im Blasenrückstand verbleibende, feinkörnige, in Wasser schwimmende PVC-Granulat abfiltriert und trocknet.

## Claims

1. A process for the recovery of polyvinyl chloride from solvent-containing PVC waste pastes, in which the solvent is removed from the paste by distillation, characterized in that the solvent-containing PVC waste paste is brought to a solids content of 60% by weight, with a deviation of ± 10%, that an acyl polyethylene glycol ester, as the emulsifier, is added in a weight ratio of 1 part of ester to 20 parts of waste paste, that thereafter an amount of water equal to twice the initial paste weight is added with stirring, that the solvent is driven out of this emulsion by means of steam and the resulting two-phase water/solvent distillate is freed from the water phase, and that the fine-grained PVC granules, floating in water, which remain in the still residue are filtered off and dried.

## Revendications

1. Procédé de recyclage de chlorure de polyvinyle à partir de déchets pâteux de PVC contenant du solvant, le solvant étant éliminé de la pâte par distillation, ce procédé étant caractérisé en ce que l'on fait en sorte que le déchet pâteux de PVC contenant du solvant atteigne un pourcentage en poids à l'état sec proche de 60%, avec une tolérance de ± 10%, en ce que l'on procède à l'addition d'un émulsionnant, l'acylpolyéthylène glycol ester, selon un rapport pondéral d'une partie d'ester pour vingt parties de déchet pâteux, en ce que l'on ajoute ensuite, tout en remuant, un poids d'eau égal au double du poids initial de la pâte, en ce que l'on extrait le solvant de cette émulsion au moyen de vapeur d'eau, que l'on obtient un distillat constitué de deux phases, eau / solvant, dont on sépare la phase aqueuse, et en ce que l'on filtre et l'on sèche le granulat de PVC à grains fins, flottant dans l'eau, qui reste dans le résidu cloqué.
